Europäisches Patentamt

(19) European Patent Office

Office européen des brevets

(11) Publication number: **0 091 115**
**B1**

(12) **EUROPEAN PATENT SPECIFICATION**

(45) Date of publication of patent specification: **05.11.86**

(21) Application number: **83103288.3**

(22) Date of filing: **05.04.83**

(51) Int. Cl.⁴: **G 08 C 23/00, B 66 C 13/40,
H 04 B 9/00, G 02 B 6/24**

(54) Construction machine.

(30) Priority: **07.04.82 JP 50337/82
07.04.82 JP 57896/82**

(43) Date of publication of application:
**12.10.83 Bulletin 83/41**

(45) Publication of the grant of the patent:
**05.11.86 Bulletin 86/45**

(84) Designated Contracting States:
**DE FR GB SE**

(56) References cited:
**EP-A-0 035 057
DE-A-2 113 690
FR-A-2 292 294
FR-A-2 463 994
GB-A-2 074 313
GB-A-2 079 558
US-A-2 781 134
US-A-4 109 997
US-A-4 277 134
US-A-4 278 323**

**PATENTS ABSTRACTS OF JAPAN, vol. 6, no.
238, 26th November 1982, page 1116 E 144**

(73) Proprietor: **KATO WORKS CO., LTD.
1-9-37, Higashiooi Shinagawa-ku
Tokyo (JP)**

(72) Inventor: **Ichiba, Akinori
4-25-41, Naka Satsute-machi
Kitakatsushika-gun Saitama-ken (JP)**

(74) Representative: **Schmidt-Evers, Jürgen, Dipl.-
Ing. et al
Patentanwälte Dipl.-Ing. H. Mitscherlich Dipl.-
Ing. K. Gunschmann Dipl.-Ing. Dr.rer.nat. W.
Körber Dipl.-Ing. J. Schmidt-Evers Dipl.-Ing. W.
Melzer Steinsdorfstrasse 10
D-8000 München 22 (DE)**

Courier Press, Leamington Spa, England.

## Description

The present invention relates to a construction machine of the type set forth in the preamble of claim 1.

In general, such a construction machine comprises a movable vehicle body, a turret disposed on the vehicle body in such a manner as to be rotatable in the horizontal direction, and a form of construction equipment adapted for construction work.

A known example (US—A—27 81 134) comprises a truck crane, a hydraulic shovel, etc. In construction machines of this kind, electric signals must be exchanged between the vehicle body and the turret. Said known example uses a rotary-type electrical connector unit to enable the signal exchange. This connector unit has a ring which is secured to a stationary member and has an electric conductivity, and a slider which is secured to a rotary member, is slidably contacted with the inner peripheral surface of the ring and also has an electric conductivity. In such a connector unit, the slider is always electrically connected to the ring regardless of the fact that the rotary member is rotating, and so an electric signal is thus transmitted from the slider to the ring (or vice versa).

However, in the connector unit of the structure as described above, the slider mechanically contacts the inner peripheral surface of the ring. Accordingly, an improper contact often occurs between the slider and the ring. Further, when the electric signal is transmitted, it is readily and adversely affected by the influence of noise. Further, since such an electrical contact may be abraded and deteriorate in performance, it does not permit electric signals to be reliably exchanged for a long period of time. It is to note that a construction machine is usually operated in a construction field. Thus, the rotary-type electrical contact used in the construction machine is operated under a particularly bad environment. It is apt to deteriorate in performance due to the presence of grains of sand, dust, or the like. In addition, the construction machine is usually operated in a city area, and thus the exchange of electric signals tends to be adversely affected by an induced current caused by an external electric wave or a high voltage source which may be located near the construction machine. The electric signal exchange is particularly affected if the construction machine has an extendible boom, as in a truck crane. The boom functions as if it were an antenna, and is apt to receive electric waves existing in the air. Where the construction machine including the boom is operated near a high-voltage transmission line, there is a possibility that an induced current will flow through the boom.

The above problems are therefore overcome by providing the construction machine with an optical slipring coupling as defined in the characterizing portion of claim 1.

Further embodiments are set forth in the subclaims.

It should be noted that optical slipring couplings between rotatable members are known per se (US—A—42 78 323); however, in the known embodiment signals may be adversely affected by external electric waves and noise before performing the optical signal exchange between a stationary casing and a rotary drum. Thus, it is impossible to perform a signal exchange reliably and accurately, as is intended with this invention.

With the construction machine of the present invention the signal exchange is not adversely affected by external electricity. The machine of the present invention is free from the problems which may arise when the signal exchange is performed with an electric signal. Furthermore, the connector for enabling the optical signal exchange between the vehicle body and the turret is provided in a rotary joint used to connect a hydraulic circuit on the vehicle body and that on the turret to each other. The connector according to the present invention can be obtained by only slightly modifying the rotary joint of a conventional construction machine. It is unnecessary to greatly change the structure of a conventional construction machine to apply the present invention. Further, the connector of the present invention is arranged above the rotary joint, so that it can be kept from being soiled by the oil leaking from the rotary joint. For this reason, the signal exchange is not adversely affected at the connector, thus allowing an optical signal exchange to be performed in a reliable manner.

Thus it is the object of the present invention to provide a signal transmission system which is capable of eliminating the above-described improper electric contact between a stationary member and a rotary member and the adverse influence of noise.

This invention can be more fully understood from the following detailed description when taken in conjunction with the accompanying drawings, in which:

Fig. 1 is a side view schematically showing a truck crane;

Fig. 2 is a view schematically showing a signal transmission system applied to a truck crane according to a first embodiment of the present invention;

Fig. 3 is a sectional view taken along the line III—III in Fig. 2;

Fig. 4 is a view schematically showing a modified example of the first embodiment shown in Fig. 2;

Fig. 5 is a view schematically showing part of the signal transmission system applied to a truck crane according to the second embodiment of the present invention;

Fig. 6 is a sectional view taken along the line VI—VI in Fig. 5;

Figs. 7 and 8 are sectional views respectively showing modified examples of the signal transmission system illustrated in Fig. 6;

Fig. 9 is a perspective sectional view schematically showing part of the signal transmission system according to the third embodiment of the present invention;

Fig. 10 is a longitudinal sectional view of part of the signal transmission system shown in Fig. 9.

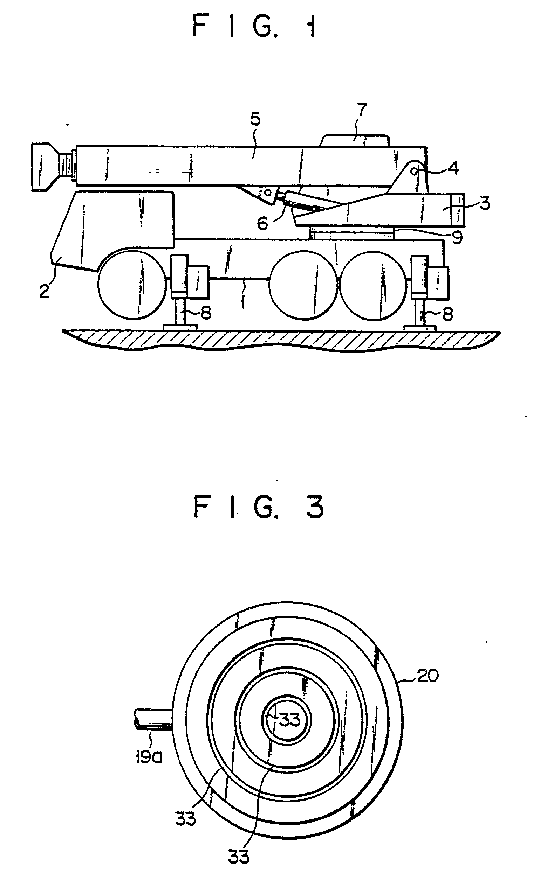

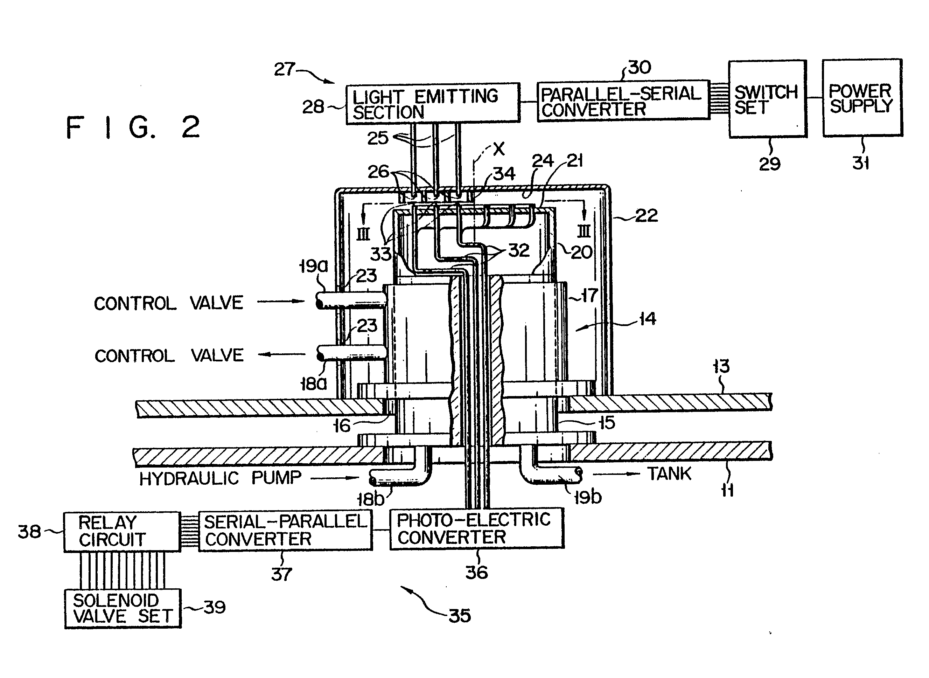

Fig. 1 schematically shows a truck crane. The body of the truck crane is designated by 1 in Fig. 1. A driving chamber 2 for steering and operating the body 1 is provided at the front of the body 1. A turntable 3 is rotatably provided on the body 1. A multi-stage telescopic boom 5 is mounted on the turntable 3, the base end of the boom 5 being rotatably supported by a pivotal shaft 4. A derrick cylinder 6 which is formed of a hydraulic cylinder is arranged between the boom 5 and the turntable 3. Therefore, the boom 5 can be rotated around the shaft 4 by the telescoping operation of the rod of the cylinder 6. A cab 7 for operating a crane is disposed on the turntable 3. When the crane is being used, the body 1 is supported by a plurality of outriggers 8 as shown in Fig. 1.

Referring to Fig. 2, a signal transmission system applied to a truck crane according to the first embodiment of the present invention is shown. In Fig. 2, the upside frame of the body 1 is designated by 11, and the downside frame of the turntable 3 is designated by 13. The frame 13 is coupled to the frame 11 through a turning bearing 9 (See Fig. 1). Accordingly, the turntable 3 is turned with respect to the body 1 around the turning central axis X of the bearing 9 shown in Fig. 2. Since the drive mechanism which is made of, for example, a hydraulic motor for turning the turntable 3 is well known, its description will be omitted.

A rotary joint 14 which is used for the connection of a hydraulic pipe is disposed coaxially with the axis X between the frame 11 of the body 1 and the frame 13 of the turntable 3. The joint 14 will be simply described below. The joint 14 has an inner cylinder 15 which is fixed to the frame 11 of the body 1. The cylinder 15 extends upwardly in Fig. 2 through a hole 16 formed at the frame 13 of the turntable 3. An outer cylinder 17 is rotatably engaged with the upper portion of the cylinder 15 (See Fig. 2). This cylinder 17 is fixed at the lower end to the frame 13 of the turntable 3. In this case, the top end of the cylinder 15 is projected from the cylinder 17. One end of each of the hydraulic pipes 18a and 19a is connected to the cylinder 17, and the other ends are individually connected to a control valve (not shown). The control valve is connected, for example, to the cylinder 6 and a hydraulic motor, both of which are disposed on the turntable 3, through hydraulic pipes (not shown). One end of each of the pipes 18b and 19b is connected to the cylinder 15, and the other ends are respectively connected to a hydraulic pump (not shown) and a hydraulic tank (not shown) disposed in the body 1. Sets of pipes 18a and 18b, 19a and 19b respectively always communicate with each other in the joint 14. In other words, each set of pipes always communicates with each other regardless of the fact that the turntable 3 is turning with respect to the body 1. Accordingly, for example, pressurized oil which is fed under pressure from a hydraulic pump in the body 1 is supplied through the pipe 18b, the joint 14 and the pipe 19a, 18a and the control valve to the cylinder 6, which is operated by the pressurized oil. Further, the pressurized oil from the cylinder 6 is returned through the pipe 19a, the control valve, the joint 14 and the pipe 19b to the tank. Since the internal structure of this rotary joint 14 is heretofore well known, its description will be omitted.

A base 20 is fixed to the top end of the cylinder 15 of the joint 14, and is formed, for example, in a hollow cylindrical shape as a stationary member. The upper surface 21 of the base 20 is the first surface of the stationary member. A cover 22 is disposed outside the joint 14 and is formed, for example, in a cylindrical shape for covering the joint 14 as a rotary member. This cover 22 is fixed onto the frame 13 of the turntable 3. The pipes 18a and 19a respectively extend outward through two holes 23 formed in the cover 22. The upper inside surface 24 of the cover 22 is, at a predetermined interval, parallel with the first surface 21 of the base 20. In other words, the upper inside surface 24 of the cover 22 is the second surface of the rotary member.

A plurality of light guides 25 which are, for example, formed of optical fibers are implanted in the cover 22. The light guides 25 respectively pass through the cover 22 and respectively open at the opening ends oppositely to the upper surface 21 of the base 20. In this case, the opening ends 26 of the light guides 25 are a light output section. The other ends of the light guides 25 are optically connected to electric-optical signal converter 27 disposed on the turntable 3. This converter 27 has a light emitting section 28 which includes a light emitting diode. This section 28 converts the inputted electric signal into a light or optical signal, which is incident on the respective light guides 25. For example, an electric signal from a switch set 29 disposed in the cab 7 is supplied to section 28 through a parallel-serial converter 30. In Fig. 2, a power supply is designated by 31.

On the other hand, in the base 20 there are a plurality of light guides 32 which are formed of optical fiber bundle. One end 33 of each of the light guides 32 is respectively opened opposite to the opening ends 26 of the light guides 25 on the upper surface 21 through the outer wall of the base 20. In other words, the opening ends 33 of the light guides 32 as a light input section are disposed coaxially around the turning central axis X as shown in Fig. 3. Accordingly, the opening ends 26 of the light guides 25 always face the opening ends 33 of the light guides 32 in the optically light guides, regardless of the fact that the turntable 3 is turning. On the upper inside surface 24 of the cover 22 divisional walls 34 are mounted so that the optical signals emitted from the opening ends 26 of light guides 25 will not interfere each other. The other ends of the light guides 32 extends through the center of the joint 14 into the body 1, and are optically connected to the photo-electric signal converter 35. This converter 35 has a photoelectric converter 36 which includes photodiodes. This converter 36 converts the received optical signal into an electric signal. The converter 36 is electrically connected, for example, through a serial-parallel converter 37 and a relay circuit 38 to a solenoid valve set 39. This valve set 39 is interposed in a hydraulic pipe (not shown) disposed in the body 1, and is, for example, used to control the operation of the above-described outrigger 8.

When the set 29 in the cab 7 is used to operate the outrigger 8 in the signal transmission system, an electric signal is outputted from the set 29. The outputted electric signal is led through the converter 30 to the section 28. The section 28 converts the received electric signal into optical signals, which are incident on the light guides 25. The optical signals are transferred from the opening ends 26 of the light guides 25 toward the opening ends 33 of the light guides 32. Thus, the optical signals incident on the opening ends 33 of the light guides 32. The optical signal thus incident on the light guides 32 is led to the section 36 through the interior. The section 36 converts the received optical signals into an electric signal and outputs the electric signal. The electric signal is led through the converter 37 and the circuit 38 to the set 39, thereby controlling the opening or closing operation of the set 39. Accordingly, the operation of the outrigger 8 can be controlled by opening or closing the set 39 in the body 1 from the cab 7 on the turntable 3.

According to the first embodiment of the present invention, the signal transmission between the rotated cover 22 and the stationary base 20 is performed by the use of the optical signals which have been converted from the electric signal. Accordingly, it does not necessitate a mechanical contact section for transmitting the signal between the cover 22 and the base 20. Therefore, the transmission of the signal cannot be lost due to improper mechanical contact. Further, the adverse influence of a noise base on the above contact can be completely eliminated.

In the first embodiment of the present invention as described above, a plurality of light guides 25 and 32 are employed. Accordingly, the optical coupling between the light guides 25 and 32 can be secured, thereby enhancing the reliability in the signal transmission between the cover 22 and the base 20.

The present invention is not limited only to the first embodiment. For example, in Fig. 4, a modified example of the first embodiment is shown. In this modified example, the outer peripheral surface 40 of the base 20 is utilized as the first surface, and the opening ends 33 of the light guides 32 circumferentially project from surface 40. A plate 41 which faces the outer peripheral surface 40 is secured to the cylinder 17 of the joint 14. The light guides 25 are implanted on the plate 41, as are the opening ends 26 which face the opening ends 33 of the light guides 32. Even in this modified example, it is evident that the example has the same functions as the first embodiment.

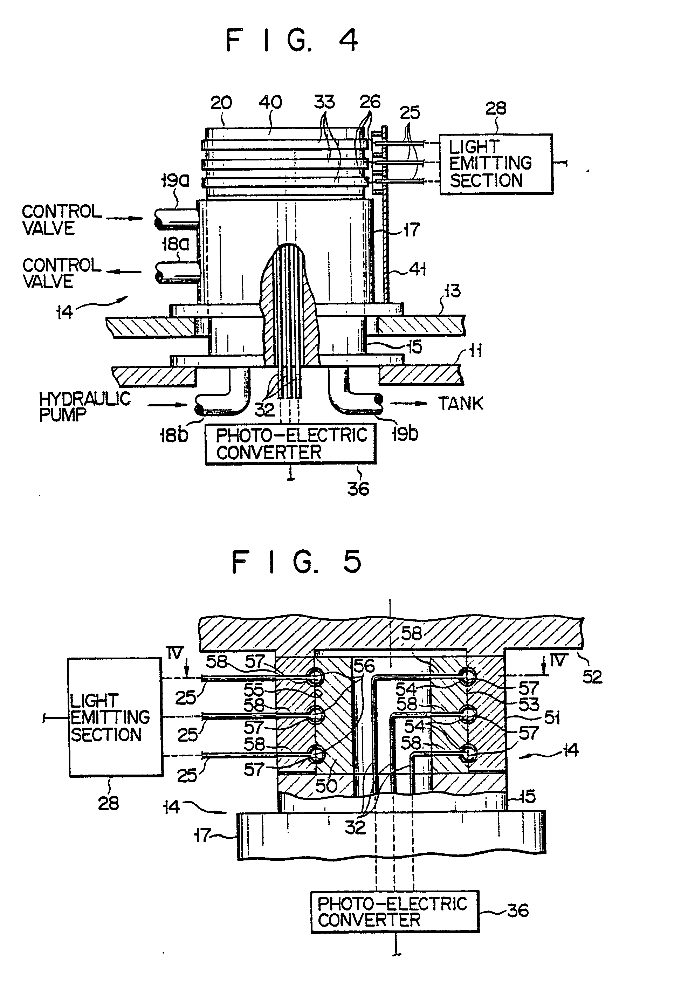

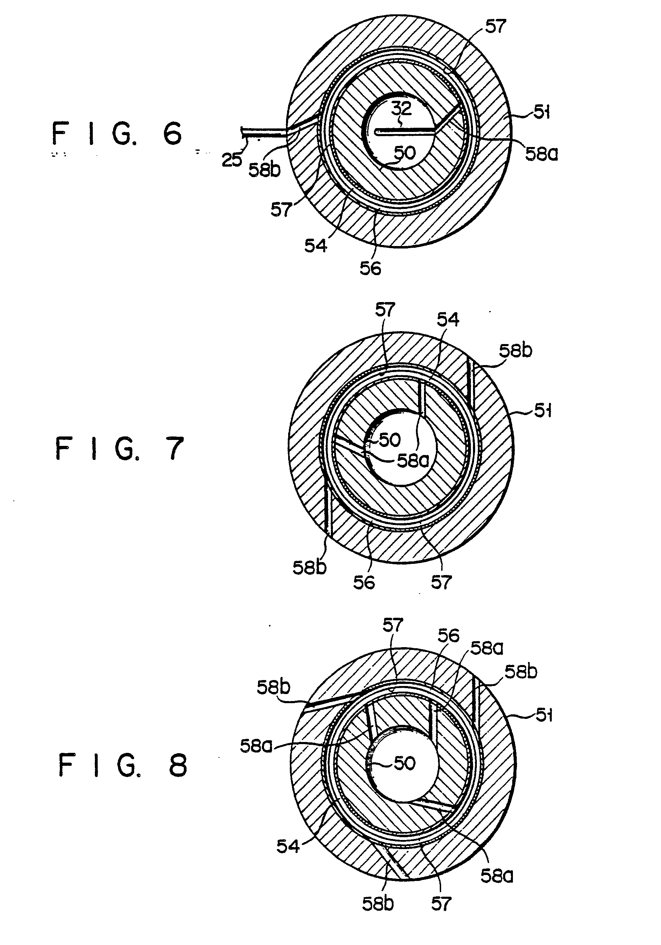

Referring further to Figs. 5 and 6, a second embodiment of the present invention is shown. In this embodiment, an inner sleeve 50 is fixed coaxially with a turning central axis X as a stationary member on the inner cylinder 15 of a rotary joint 14. An outer sleeve 51 as a rotary member is rotatably engaged with the sleeve 50, and the sleeve 51 is fixed to a frame 52 which is integrally coupled with a cylinder 17 of the joint 14. In the sleeve 50, a plurality of ringlike grooves 54 are formed on the outer circumferential surface 53 as the first surface thereof. On the other hand, in the sleeve 51, a plurality of ringlike grooves 56 (the same number as the grooves 54) are formed on the inner circumferential surface 55 as the second surface thereof. Both these grooves 54 and 56 are formed in a semicircular shape when viewed in cross section and are superposed on each other to face each other. Accordingly, an internal passage of circular shape (in cross section) is defined between the sleeves 50 and 51 by the superposition of the grooves 54 and 56. Reflective films 57 are respectively formed on the inner surfaces of both the grooves 54 and 56. In this case, one set of grooves 56 are a light output section, and the other grooves 54 are a light input section. As shown in Fig. 6, the sleeves 50 and 51 have passages 58a and 58b, respectively. The passages 58a and 58b communicate at one end with the grooves 54 and 56, and also communicate at the other end with the light guides 32 and 25 formed of optical fibers, respectively.

In the second embodiment as described above, when an optical signal is, for example, incident from the section 28 onto the light guide 25 of the sleeve 51, this signal is emitted, through the light guide 25 and the passage 58b from the grooves 56. The signal emitted from the grooves 56 is transmitted in the internal passage defined between the grooves 56 and 54 while reflecting, and is led through the passage 58a of the sleeve 50 into the light guide 32. The signal thus incident on the light guide 32 is led to the converter 36. Accordingly, even in this second embodiment, the transmission of the optical signal can be performed between the rotated sleeve 51 and the stationary sleeve 50.

In the second embodiment described above, the transmission paths of the optical signal, which connect the body 1 and the cap 7, substantially formed a single path. Accordingly, in the case of a truck crane, for example, it is adapted to transmit information about the driving state of an engine arranged on the body 1, such as its rotating speed, coolant temperature, etc., to instruments in the cab 7 by using the optical signal.

Referring to Figs. 7 and 8, modified examples of the second embodiment of the present invention are respectively shown. In these modified examples, a plurality of passages 58a, 58b which respectively communicate with the grooves 54 and 56 of sleeves 50 and 51 are provided. Thus, the transmission of the optical signal can be further effectively performed between the sleeves 50 and 51.

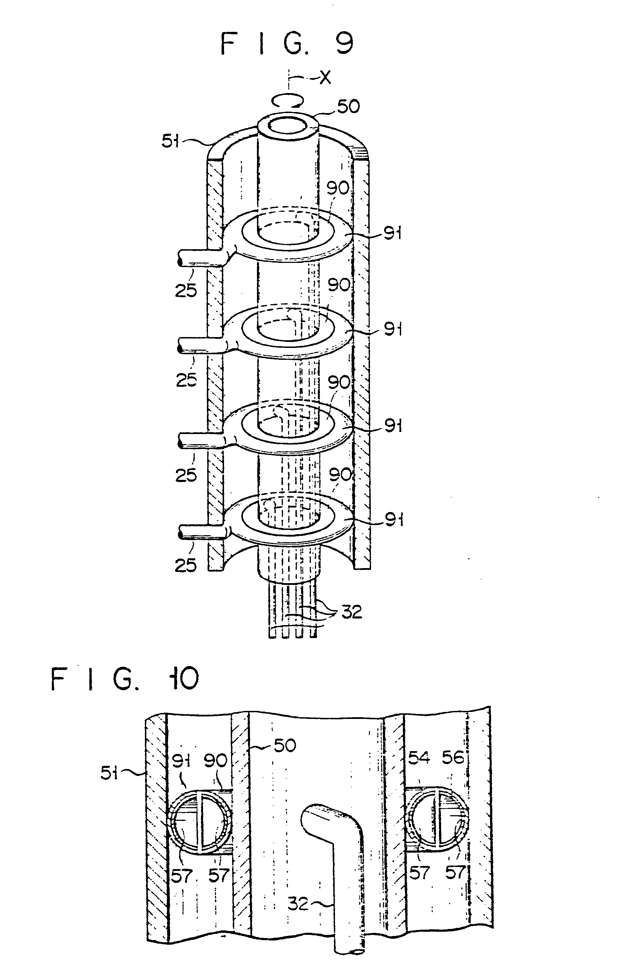

Referring now to Figs. 9 and 10, a third embodiment of the present invention is shown. In the third embodiment, groove structures 90 and 91 which have the same functions as the above-described grooves 54 and 56 are respectively secured to the outer surface of the sleeve 50 and the inner surface of the sleeve 51. The light guide 25 and 32 are respectively connected directly to the structures 90 and 91. In this case, either sleeve 51 or 50 may be rotated.

In the above embodiments, the same reference numerals designate members having the same function.

As described above, the present invention can be applied not only to a truck crane but to a variety of construction machines.

**Claims**

1. A construction machine, comprising:
a movable vehicle body (1, 2, 8);
a turret (3, 4, 7) disposed on the vehicle body (1, 2, 8) so as to be rotatable in a horizontal plane;
a hydraulically operatable construction equipment (5, 6) disposed on the turret (3, 4, 7) and adapted for construction work;
a connector (9, 14), disposed between the vehicle body (1, 2, 8) and the turrent (3, 4, 7) such that the axis (X) of the connector (9, 14) is coincident with the rotational axis of the turret (3, 4, 7), for hydraulically connecting a first hydraulic circuit (18b, 19b) which is disposed on the vehicle body (1, 2, 8) and adapted to apply hydraulic pressure to the construction equipment (5, 6) and a second hydraulic circuit (18a, 19a) which is disposed on the construction equipment (5, 6), irrespective of the position of the turret (3, 4, 7), said connector (9, 14) including an outer cylinder (17) and an inner cylinder (15) inserted into the outer cylinder (17) in a rotatable and liquid-tight manner, one of the cylinders (15) being secured to the vehicle body (1, 2, 8) and the other cylinder (17) being secured to the turret (3, 4, 7); and
a signal transmission system for allowing a signal transmission between the vehicle body (1, 2, 8) and the turret (3, 4, 7), characterized in that said signal transmission system includes:
a stationary member (20) associated with said one cylinder (15) secured to the vehicle body (1, 2, 8) and having a first surface (21);
a rotary member (22) fixed either to the turret (3, 4, 7) or to said other cylinder (17) and having a second surface (24) facing the first surface (21), said rotary member (22) being rotated together with the turret (3, 4, 7) while allowing the first and second surface (21, 24) to face each other;
an optical signal irradiating member (26) provided in one of the first and second surfaces (21, 24) and capable of irradiating an optical signal to the opposite surface (24, 21);

an optical signal receiving member (33) provided in the other surface (24, 21) in such a manner that it always faces the optical signal irradiating member (26), said optical signal receiving member (33) being capable of receiving an optical signal irradiated from the optical signal irradiating member (26);
an electric-optical signal converter (27) provided in the vehicle body (1, 2, 8) or turret (3, 4, 7), as the case may be, in which the electric signal irradiating member (26) is provided and adapted to convert an electric signal to be exchanged between the vehicle body (1, 2, 8) and the turret (3, 4, 7) into an optical signal and to output this optical signal;
a first optical signal transmitting means (26) for transmitting the optical signal output from the electric-optical converter (27) to the optical signal irradiating member (26);
a second optical signal transmitting means (32) for transmitting the optical signal received from the optical signal receiving member (33); and
an optical-electric signal converter (35) provided in the turret or the vehicle body (1, 2, 8), as the case may be, in which the optical signal receiving member (33) is provided and adapted to convert the optical signal transmitted by the second optical signal transmitting means (32) into an electric signal and to output this electric signal.

2. A construction machine according to claim 1, characterized in that said vehicle body (1, 2, 8) is mounted on wheels.

3. A construction machine according to claim 1 or 2, characterized in that said stationary member (20) is integrally formed with said one cylinder (15) secured to the vehicle body (1, 2, 8), said first surface is defined by an upper surface (21) of said one cylinder (15), said second surface is defined by an upper inner surface (24) of a cover (22) which is secured to the turret (3, 4, 7) in such a manner as to surround the connector (9, 74), and said first and second surfaces (21, 24) are parallel to each other.

4. A construction machine according to claim 1 or 2, characterized in that said stationary member is a projecting cylinder (40) coaxially extending from the upper end of said one cylinder (15) secured to the vehicle body (1, 2, 8), said first surface is defined by the outer circumferential surface of the projecting cylinder (40), and said rotary member is a plate (41) which is rotated along the outer circumferential surface of the projecting cylinder (40) in accordance with the rotation of the turret (3, 4, 7).

5. A construction machine according to claim 3 or 4, characterized in that said optical signal irradiating member is constituted by an open end (26) of at least one optical fiber cable (25), and said optical signal receiving member is constituted by open ends (33) of a plurality of optical fiber cables (32), said open ends (33) constituting the optical signal receiving member always facing the open end or ends (26) constituting the optical signal irradiating member, irrespectively of the position of the turret (3, 4, 7).

6. A construction machine according to any one of claims 1 to 5 characterized in that said signal transmission system further includes a means (34) for preventing the optical signal receiving member from receiving an optical signal irradiated from members (26) other than the related optical signal irradiating member (26).

7. A construction machine according to claim 1 or claim 2, characterized in that said stationary member is a first ring (50) which is coaxially coupled to the upper end of said one cylinder (15) secured to the vehicle body (1, 2, 8), said rotary member is a second ring (51) which can slide along the outer circumferential surface (53) of the first ring (50), said first and second rings (50, 51) constitute a double ring structure, and the sliding circumferential surfaces (53, 55) of the first and second rings (50, 51) constitute said first and second surfaces, respectively.

8. A construction machine according to claim 7, characterized in that said optical signal irradiating member is constituted by a first annular groove (56; 91) which is provided in the sliding circumferential surface (55) of one (51) of the first and second rings (50, 51) and has a semicircular cross section, said optical signal receiving member is constituted by a second annular groove (54; 90) which is provided in the sliding circumferential surface (53) of the other ring (50) and has a semicircular cross section, and said second annular groove (54; 90) is so provided as to face the first annular groove (55; 91).

9. A construction machine according to claim 8, characterized in that a reflecting film (57) is formed on the inner surface of each of the first and second annular grooves (56, 54; 91, 90).

10. A construction machine according to any one of claims 1 to 9 characterized in that said first and second optical signal transmitting means (25, 32) include an optical fiber cable which optically connects the electric-optical signal converter (27) and the optical signal irradiating member (26) to each other and optically connects the optical-electric signal converter (35) and the optical signal receiving member (33) to each other.

## Patentansprüche

1. Baumaschine, mit
einem bewegbaren Fahrzeugkörper (1, 2, 8),
einer auf dem Fahrzeugkörper (1, 2, 8) so angeordneten Drehkanzel (3, 4, 7), daß sie in einer horizontalen Ebene drehbar ist,
einer hydraulisch betätigbaren Maschinenausrüstung (5, 6), die an der Drehkanzel (3, 4, 7) angeordnet kkd für Bauarbeiten ausgebildet ist,
einer Verbindungseinrichtung (9, 14), die zwischen dem Fahrzeugkörper (1, 2, 8) und der Drehkanzel (3, 4, 7) so angeordnet ist, daß die Achse (X) der Verbindungseinrichtung (9, 14) mit der Drehachse der Drehkanzel (3, 4, 7) zusammenfällt, zur hydraulischen Verbindung eines ersten Hydraulikkreises (18b, 19b), der am Fahrzeugkörper (1, 2, 8) angeordnet ist und zur Zufuhr von Hydraulikdruck zur Maschinenausrüstung (5, 6) ausgebildet ist, und eines zweiten Hydraulikkreises (18a, 19a), der an der Maschinenausrüstung (5, 6) angeordnet ist, und zwar unabhängig von der Lage der Drehkanzel (3, 4, 7), wobei die Verbindungseinrichtung (9, 14) einen Außenzylinder (17) und einen Innenzylinder (15) aufweist, der in den Außenzylinder (17) drehbar und flüssigkeitsdicht eingesetzt ist, wobei einer der Zylinder (15) mit dem Fahrzeugkörper (1, 2, 8) und der andere Zylinder (17) mit der Drehkanzel (3, 4, 7) verbunden ist, und
einem Signalübertragungssystem zur Signalübertragung zwischen dem Fahrzeugkörper (1, 2, 8) und der Drehkanzel (3, 4, 7),
dadurch gekennzeichnet,
daß das Signalübertragungssystem aufweist:
ein stationäres Teil (20), das demjenigen einen Zylinder (15) zugeordnet ist, der am Fahrzeugkörper (1, 2, 8) angebracht ist und das eine erste Fläche (21) aufweist,
ein drehbares Teil (22), das entweder an der Drehkanzel (3, 4, 7) oder dem anderen Zylinder (17) angebracht ist und eine zweite Fläche (24) aufweist, die der ersten Fläche (21) gegenüberliegt, wobei das drehbare Teil (22) zusammen mit der Drehkanzel (3, 4, 7) drehbar ist, wobei erste und zweite Fläche (21, 24) einander gegenüberliegend bleiben,
einen Sender (26) optischer Signale, der in einer von erster und zweiter Fläche (21, 24) vorgesehen ist und ein optisches Signal zur gegenüberliegenden Fläche (24, 21) abstrahlen kann,
ein Empfänger (33) optischer Signale, der in der anderen Fläche (24, 21) derart vorgesehen ist, daß er stets dem Sender (26) optischer Signale gegenüberliegt, wobei der Empfänger (33) optischer Signale ein von dem Sender (26) optischer Signale abgestrahltes optisches Signal empfangen kann,
einen elektro-optischen Signalumsetzer (27), der in dem Fahrzeugkörper (1, 2, 8) bzw. der Drehkanzel (3, 4, 7) vorgesehen ist, in dem bzw. der der Sender (26) optischer Signale vorgesehen ist, und der zum Umsetzen eines elektrischen Signales, das zwischen dem Fahrzeugkörper (1, 2, 8) und der Drehkanzel (3, 4, 7) auszutauschen ist, in ein optisches Signal und zur Ausgabe dieses optischen Signals ausgebildet ist,
eine erste Übertragungseinrichtung (26) für optische Signale zum Übertragen des vom elektro-optischen Signalumsetzer (27) abgegebenen optischen Signals zum Sender (26) des optischen Signals,
eine zweite Übertragungseinrichtung (32) für optische Signale zum Übertragen des vom Empfänger (33) optischer Signale empfangenen optischen Signals und
einen opto-elektrischen Signalumsetzer (35) in der Drehkanzel (3, 4, 7) bzw. dem Fahrzeugkörper (1, 2, 8), in der bzw. dem der Empfänger (33) optischer Signale vorgesehen ist und der zum Umsetzen des durch die zweite Übertragungseinrichtung (32) optischer Signale übertragenen optischen Signal in ein elektrisches Signal und zur Ausgabe dieses elektrischen Signals ausgebildet ist.

2. Baumaschine nach Anspruch 1, dadurch gekennzeichnet, daß der Fahrzeugkörper (1, 2, 8) auf Rädern angeordnet ist.

3. Baumaschine nach Anspruch 1 oder 2, dadurch gekennzeichnet, daß das stationäre Teil (20) mit dem einen Zylinder (15) einstückig ausgebildet ist, der am Fahrzeugkörper (1, 2, 8) befestigt ist, wobei die erste Fläche durch die Oberseite (21) des einen Zylinders (15) definiert ist, wobei die zweite Fläche durch eine oben liegende Innenseite (24) einer Abdeckung (22) definiert ist, die an der Drehkanzel (3, 4, 7) derart befestigt ist, daß sie die Verbindungseinrichtung (9, 74) umgibt, und erste und zweite Flächen (21, 24) zueinander parallel sind.

4. Baumaschine nach Anspruch 1 oder 2, dadurch gekennzeichnet, daß das stationäre Teil ein vorspringender Zylinder (40) ist, der koaxial vom Oberende des einen Zylinders (15) wegragt, der am Fahrzeugkörper (1, 2, 8) befestigt ist, wobei die erste Fläche durch die Außenumfangsfläche des vorspringenden Zylinders (40) gebildet ist, und das drehbare Teil eine Platte (41) ist, die längs der Außenumfangsfläche des vorspringenden Zylinders (40) entsprechend der Drehung der Drehkanzel (3, 4, 7) verdrehbar ist.

5. Baumaschine nach Anspruch 3 oder 4, dadurch gekennzeichnet, daß der Sender optischer Signale durch ein offenes Ende (26) mindestens eines Lichtleitfaserkabels (25) gebildet ist und der Empfänger optischer Signale durch offene Enden (33) mehrerer Lichtleitfaserkabeln (32) gebildet ist, wobei die offenen Enden, die den Empfänger optischer Signale bilden, stets dem mindestens einen offenen Ende (26) gegenüberliegen, das den Sender optischer Signale bildet, unabhängig von der Lage der Drehkanzel (3, 4, 7).

6. Baumaschine nach einem der Ansprüche 1 bis 5, dadurch gekennzeichnet, daß das Signalübertragungssystem ferner eine Einrichtung (34) aufweist, die verhindert, daß der Empfänger optischer Signale optische Signale empfangen kann, die von anderen Teilen (26) abgestrahlt sind, als von dem zugehörigen Sender (26) optischer Signale.

7. Baumaschine nach Anspruch 1 oder 2, dadurch gekennzeichnet, daß das stationäre Teil ein erster Ring (50) ist, der koaxial mit dem oberen Ende des einen Zylinders (15) gekoppelt ist, der an dem Fahrzeugkörper (1, 2, 8) befestigt ist, das drehbare Teil ein zweiter Ring (51) ist, der längs der Außenumfangsfläche (53) des ersten Rings (50) gleiten kann, erster und zweiter Ring (50, 51) eine Doppelringanordnung bilden und die aneinander gleitenden Umfangsflächen (53, 55) von erstem und zweitem Ring (50, 51) die erste bzw. die zweite Fläche bilden.

8. Baumaschine nach Anspruch 7, dadurch gekennzeichnet, daß der Sender optischer Signale durch ein erste Ringnut (56, 91) gebildet ist, die in der Gleit-Umfangsfläche (55) eines (51) von erstem und zweitem Ring (50, 51) gebildet ist und halbkreisförmigen Querschnitt besitzt, wobei der Empfänger optischer Signale durch eine zweite Ringnut (54; 90) gebildet ist, die in der Gleit-Umfangsfläche (53) des anderen Rings (50) ausgebildet ist und halbkreisförmigen Querschnitt besitzt und wobei die zweite Ringnut (54; 90) so angeordnet ist, daß sie der ersten Ringnut (55; 91) gegenüberliegt.

9. Baumaschine nach Anspruch 8, dadurch gekennzeichnet, daß ein reflektierender Film (57) an der Innenfläche von sowohl erster als auch zweiter Ringnut (56, 54; 91, 90) ausgebildet ist.

10. Baumaschine nach einem der Ansprüche 1 bis 9, dadurch gekennzeichnet, daß erste und zweite Übertragungseinrichtung (25, 32) optischer signale ein Lichtleitfaserkabel aufweisen, die den elektro-optischen Signalumsetzer (27) und den Sender (26) optischer Signale optische miteinander verbinden und den opto-elektrischen Signalumsetzer (35) und den Empfänger optischer Signale (33) optische miteinander verbinden.

**Revendications**

1. Machine de chantier, comprenant
une carrosserie (1, 2, 8) de véhicule mobile,
une tourelle (3, 4, 7) disposée sur la carrosserie (1, 2, 8) du véhicule afin qu'elle puisse tourner dans un plan horizontal,
un appareillage (5, 6) de chantier, fonctionnant hydrauliquement, placé sur la tourelle (3, 4, 7) et destiné à un travail de chantier,
un connecteur (9, 14) placé entre la carrosserie (1, 2, 8) du véhicule et la tourelle (3, 4, 7) afin que l'axe (X) du connecteur (9, 17) coïncide avec l'axe de rotation de la tourelle (3, 4, 7) et qu'un premier circuit hydraulique (18b, 19b) disposé sur la carrosserie (1, 2, 8) du véhicule soit connecté hydrauliquement, et destiné à transmettre la pression hydraulique à l'appareillage (5, 6) de chantier, et un second circuit hydraulique (18a, 19a) disposé sur l'appareillage de chantier (5, 6), indépendamment de la position de la tourelle (3, 4, 7), le connecteur (9, 14) comprenant un cylindre externe (17) et un cylindre interne (15) placé dans le cylindre externe (17) d'une matière étanche et afin qu'il puisse tourner, l'un des cylindres (15) étant fixé à la carrosserie (1, 2, 8) du véhicule et l'autre cylindre (17) étant fixé à la tourelle (3, 4, 7) et
un circuit de transmission de signaux destiné à permettre la transmission des signaux entre la carrosserie (1, 2, 8) du véhicule et la tourelle (3, 4, 7), caractérisée en ce que le circuit de transmission de signaux comprend
un organe fixe (20) associé au premier cylindre (15) fixé à la carrosserie (1, 2, 8) du véhicule et ayant une première surface (21),
un organe rotatif (22) fixé soit à la tourelle (3, 3, 7) soit à l'autre cylindre (17) et ayant une seconde surface (24) tournée vers la première surface (21), l'organe rotatif (22) étant entraîné en rotation avec la tourelle (3, 4, 7) alors que la première et la seconde surface (21, 24) peuvent être en regard,

un organe (26) d'éclairement à l'aide d'un signal optique placé dans l'une des première et seconde surfaces (21, 24) et capable de projeter un signal optique sur la surface opposée (24, 21),

un organe (33) de réception de signal optique placé dans l'autre surface (24, 21) de manière qu'il soit toujours en face de l'organe (26) de projection du signal optique, l'organe (33) de réception du signal optique pouvant recevoir un signal optique projeté par l'organe (26) de projection d'un signal optique,

un convertisseur électro-optique (27) de signaux placé dans la carrosserie (1, 2, 8) du véhicule ou dans la tourelle (3, 4, 7), selon le case, dans lequel l'organe (26) de projection d'un signal électrique est disposé et destiné à transformer un signal électrique qui doit être échangé entre la carrosserie (1, 2, 8) du véhicule et la tourelle (3, 4, 7) en un signal optique et à transmettre ce signal optique,

un premier dispositif (26) de transmission de signaux optiques destiné à transmettre des signaux optiques provenant du convertisseur électro-optique (27) à l'organe (26) de projection d'un signal optique,

un second dispositif (32) de transmission de signaux optiques destiné à transmettre le signal optique qu'il reçoit de l'organe (33) de réception de signaux optiques, et

un convertisseur opto-électrique (35) de signaux placé dans la tourelle ou la carrosserie (1, 2, 8) du véhicule, selon le cas, dans lequel l'organe (33) de réception de signal optique est disposé et est destiné à transformer le signal optique transmis par le second dispositif (32) de transmission de signaux optiques en un signal électrique et à transmettre ce signal électrique.

2. Machine de chantier selon la revendication 1, caractérisé en ce que la carrosserie (1, 2, 8) du véhicule est montée sur roues.

3. Machine de chantier selon l'une des revendications 1 et 2, caractérisée en ce que l'organe fixe (20) est formé afin qu'il soit solidaire du premier cylindre (15) fixé à la carrosserie (1, 2, 8) du véhicule, la première surface est délimitée par une face supérieure (21) du premier cylindre (15), la seconde surface est délimitée par une surface interne supérieure (24) d'un couvercle (22) qui est fixé à la tourelle (3, 4, 7) de manière qu'il entoure le connecteur (9, 74), et la première et la seconde surface (21, 24) sont parallèles l'une à l'autre.

4. Machine de chantier selon l'une des revendications 1 et 2, caractérisée en ce que l'organe fixe est un cylindre (40) qui dépasse coaxialement de l'extrémité supérieure du premier cylindre (15) fixé à la carrosserie (1, 2, 8) du véhicule, la première surface est délimitée par la surface circonférentielle externe du cylindre (40) qui dépasse, et l'organe rotatif est une plaque (41) qui peut tourner le long de la surface circonférentielle externe du cylindre qui dépasse (40) en fonction de la rotation de la tourelle (3, 4, 7).

5. Machine de chantier selon l'une des revendications 3 et 4, caractérisée en ce que l'organe de projection d'un signal optique est constitué par une extrémité libre (26) d'au moins un câble (25) à fibre optique, et l'organe de réception d'un signal optique est constitué par les extrémités libres (33) de plusieurs câbles (32) à fibre optique, les extrémités libres (33) constituant l'organe de réception d'un signal optique étant toujours tournées vers l'extrémité ou les extrémités (26) constituant l'organe de projection d'un signal optique, quelle que soit la position de la tourelle (3, 4, 7).

6. Machine de chantier selon l'une quelconque des revendications 1 à 5, caractérisée en ce que le circuit de transmission de signaux comporte en outre un dispositif (34) destiné à empêcher la réception par l'organe de réception de signal optique, d'un signal optique projeté par des organes (26) autres que l'organe associé (26) de projection d'un signal optique.

7. Machine de chantier selon l'une des revendications 1 et 2, caractérisée en ce que l'organe fixe est une première bague (50) couplée coaxialement à l'extrémité supérieure du premier cylindre (15) fixé à la carrosserie (1, 2, 8) du véhicule, l'organe rotatif est une seconde bague (51) qui peut coulisser le long de la surface circonférentielle externe (53) de la première bague (50), la première et la seconde bague (50, 51) constituant une structure à deux bagues, et les surfaces circonférentielles coulissantes (53, 55) de la première et de la seconde bague (50, 51) constituent la première et la seconde surface respectivement.

8. Machine de chantier selon la revendication 7, caractérisée en ce que l'organe de projection d'un signal optique est constitué par une première gorge annulaire (56; 91) qui est formée à la surface circonférentielle (55) de coulissement de l'une (51) des première et seconde bagues (50, 51) et a une section semi-circulaire, l'organe de réception d'un signal optique est constitué par une seconde gorge annulaire (54; 90) formée dans la surface circonférentielle (53) de coulissement de l'autre bague (50) et a une section semi-circulaire, et la seconde gorge annulaire (54; 90) est disposée de manière qu'elle se trouve en face de la première gorge annulaire (55; 91).

9. Machine de chantier selon la revendication 8, caractérisée en ce qu'un film réfléchissant (57) est formé à la face interne de chacune des première et seconde gorges annulaires (56, 54; 91, 90).

10. Machine de chantier selon l'une quelconque des revendications 1 à 9, caractérisée en ce que le premier et le second dispositif (25, 32) de transmission de signaux optiques comporte un câble à fibre optique qui connecte optiquement le convertisseur (27) de signaux électro-optiques et l'organe (26) de projection d'un signal optique l'un à l'autre et qui connecte optiquement le convertisseur (35) de signaux opto-électrique et l'organe (33) de réception de signal optique l'un à l'autre.

# F I G. 1

# F I G. 3

FIG. 2

| 27 | | 30 | | |
| LIGHT EMITTING SECTION | PARALLEL-SERIAL CONVERTER | SWITCH SET | POWER SUPPLY |

28 25 X 24 21 22 29 31

26 34 20

III 33 32 III

19a 23 17

CONTROL VALVE 23 14

CONTROL VALVE 13

18a

16 15

HYDRAULIC PUMP → TANK 11

18b 19b

| 38 | RELAY CIRCUIT | SERIAL-PARALLEL CONVERTER | PHOTO-ELECTRIC CONVERTER |

37 36

SOLENOID VALVE SET 39

35

0 091 115

# F I G. 4

20  40  33  26  25  28

LIGHT
EMITTING
SECTION

19a

CONTROL
VALVE

18a

CONTROL
VALVE

17

41

14

13

15

11

HYDRAULIC
PUMP

32

TANK

18b

PHOTO-ELECTRIC
CONVERTER

19b

36

# F I G. 5

58

IV  58  57  56  IV  52

LIGHT
EMITTING
SECTION

25  55  54  57
58  58  53
51

25  57
58  54  57
58  14

25  57  50  15
32
28  14

17

PHOTO-ELECTRIC
CONVERTER

36

FIG. 6

FIG. 7

FIG. 8

FIG. 9

FIG. 10